## Europäisches Patentamt
## European Patent Office
## Office européen des brevets

(19)

(11) Numéro de publication: **0 049 652 B1**

(12) **FASCICULE DE BREVET EUROPEEN**

(45) Date de publication du fascicule du brevet:
**29.08.84**

(51) Int. Cl.³: **H 04 B 1/66, H 04 L 25/36**

(21) Numéro de dépôt: **81401461.9**

(22) Date de dépôt: **18.09.81**

(54) **Dispositif de compression et dispositif de décompression temporelle de données.**

(30) Priorité: **03.10.80 FR 8021226**

(43) Date de publication de la demande:
**14.04.82 Bulletin 82/15**

(45) Mention de la délivrance du brevet:
**29.08.84 Bulletin 84/35**

(84) Etats contractants désignés:
**DE GB**

(56) Documents cités:
**DE - A - 2 437 152**
**FR - A - 2 150 067**
**FR - A - 2 313 827**

(73) Titulaire: **THOMSON-CSF, 173, Boulevard Haussmann, F-75379 Paris Cedex 08 (FR)**

(72) Inventeur: **Fourcade, Pierre, THOMSON-CSF SCPI 173, bld Haussmann, 75360 Paris Cedex 08 (FR)**

(74) Mandataire: **Turlèque, Clotilde et al, THOMSON-CSF SCPI 173, Bld Haussmann, F-75379 Paris Cedex 08 (FR)**

BUNDESDRUCKEREI BERLIN

## Description

La présente invention concerne les dispositifs de compression et les dispositifs de décompression temporelle de données.

Une compression de données consiste à générer, à partir d'un signal constitué d'une suite continue de données de rythme $F_n$, une suite de paquets de N données, de durée $t_{bc}$, périodiques, et pour lesquels le rythme $F_p$ des données est supérieur à $F_n$.

Une telle compression est réalisée, par exemple, en effectuant un remplissage d'une mémoire au rythme $F_n$ et en vidant cette mémoire au rythme $F_p$ tous les $t_b$, où $t_b$ est la durée d'une suite de N données avant compression. La décompression s'effectue de façon semblable à l'aide d'une mémoire dont les rythmes de remplissage et de vidage sont intervertis.

Ce procédé est décrit dans la demande de brevet allemand DE-A-24 37 152. Selon ce procédé connu, les deux signaux d'horloge donnant les rythmes $F_n$ et $F_p$, sont inchangés pendant toute la durée de la compression du flot continu de données. Or, au début de chaque paquet de données les signaux d'horloge doivent être en phase, ce qui entraîne une contrainte sur la valeur $t_b$; elle doit être choisie en fonction du taux de compression désiré.

En effet, les valeurs des périodes $T_n$ et $T_p$, correspondant respectivement aux rythmes $F_n$ et $F_p$, sont liées par la relation:

$$T_p = \frac{p}{n} \times T_n$$

(p et n entiers positifs et premiers entre eux).

Cette dernière relation doit être vérifiée afin qu'il existe une correspondance de phase entre $F_n$ et $F_p$, sous peine de ne pouvoir restituer à la réception un flot continu de données au rythme $F_n$.

La compression d'un paquet de N données

$$\left( N = \frac{t_b}{T_n} \right)$$

produit un »blanc« de durée $\tau$ pendant lequel aucune donnée n'est transmise. Cette durée $\tau$ correspond à la différence entre la durée $t_b$ du paquet de N données avant compression et la durée $t_{bc}$ du paquet après compression.

En posant $u = \frac{T_n}{n}$, ce qui entraîne

$$t_b = N \cdot n \cdot u \text{ et } t_{bc} = N \cdot p \cdot u,$$

il peut être déduit que $\tau = N(n-p)u$.

Si, comme dans le cas des compresseurs classiques, la phase du signal d'horloge donnant le rythme $F_p$ n'est pas modifiée à la fin du »blanc« existant, il est nécessaire que la durée $\tau$ du »blanc« soit choisie égale à un nombre entier de période $T_p$ pour assurer une synchronisation des deux signaux d'horloge au début de chaque paquet de données.

Ceci n'est possible que lorsque $Nn - p) = kp$, c'est-à-dire $N = k'p$ (k entier positif, $k' = \frac{k}{n-p}$).

Ainsi le nombre N ne peut être quelconque, il dépend de p. Ce qui, pour un taux de compression donné, quantifie la durée $t_b$ des paquets de N données parmi un ensemble restreint de valeurs possibles.

La présente invention a pour objet de pallier cet inconvénient des compresseurs classiques en permettant un fonctionnement des compresseurs quelque soit la durée des paquets de données pour un taux de compression fixe.

Dans la suite du texte et dans les revendications, un signal formé d'un flot continu de données à fréquence de répétition $F_n$ sera appelé »signal à comprimer« lorsque ce sera le signal d'entrée du dispositif de compression selon l'invention, et signal »décomprimé« lorsqu'il s'agira du signal de sortie du dispositif de décompression selon l'invention. De même, le signal formé d'une suite de paquets de données, de durée $t_{bc}$, périodiques, et dont le rythme des données est $F_p$, sera appelé signal »comprimé«. Les paquets de N données d'un signal »comprimé« seront appelés paquets »comprimés«; ceux d'un signal »à comprimer« seront appelés paquets »à comprimer«.

Selon l'invention, un dispositif de compression temporelle d'une suite continue de données, dans un rapport $k = \frac{p}{n}$ (p et n entiers positifs, premiers entre eux), effectuant une compression par paquets de N données, comportant: deux mémoires ayant une entrée commune recevant un signal de données »à comprimer« dont le rythme des données est $F_n$ et une sortie commune délivrant un signal de données »comprimé«; et des moyens de commande pour commander une écriture de données à un rythme $F_n$ et une lecture de ces données à un rythme $F_p = k \cdot F_n$, alternativement dans l'une des mémoires et dans l'autre mémoire; est caractérisé en ce que ces moyens de commande comportent:

— un diviseur de fréquence par n, recevant un premier signal d'horloge de fréquence $nF_n$, et délivrant un deuxième signal d'horloge de fréquence $F_n$;

— un diviseur de fréquence par p recevant le premier signal d'horloge et délivrant respectivement p signaux d'horloge $h_i$ (i variant de 0 à p-1) de fréquence $F_p$ et dont les p phases $\varphi_i$ sont telles que

$$\varphi_{i+1} - \varphi_i = \frac{2\pi}{p},$$

pour tout i;

— un multiplexeur transmettant l'un des p signaux d'horloge $h_i$;
— des moyens pour commander le multiplexeur pour sélectionner un signal d'horloge $h_i$ tel que:

$$i = j . N . (n-p) \text{ modulo } p$$

à chaque instant $t_o + j . t_b$, où j est un nombre entier positif, où $t_o$ est un instant où le signal d'horloge $h_o$ est en phase avec le signal d'horloge de fréquence $F_n$, et où $t_b$ est la durée d'une suite de N données à comprimer;
— un circuit de commande commandant l'écriture de données dans l'une des mémoires au rythme $F_n$ du deuxième signal d'horloge et la lecture de données dans l'autre mémoire au rythme $F_p$ du signal d'horloge $h_i$ sélectionné, alternativement dans les deux mémoires.

Selon l'invention, un dispositif de décompression temporelle de données fournissant une suite continue de données à partir d'un signal »comprimé« fourni par un dispositif de compression par paquets de N données, et dont le rapport de compression est $k = \dfrac{p}{n}$ (p et n entiers positifs, premiers entre eux), comportant: deux mémoires ayant une entrée commune recevant le signal »comprimé« dont le rythme des données est $F_p$, une sortie commune délivrant un signal »décomprimé« dont le rythme des données est $F_n$; et des moyens de commande pour commander une écriture de données à un rythme $F_p$ puis une lecture de ces données à un rythme $F_n = \dfrac{F_p}{k}$, alternativement dans l'une des mémoires et dans l'autre mémoire; est caractérisé en ce que ces moyens de commande comportent:

— un diviseur de fréquences par n ayant une entrée recevant un premier signal d'horloge de fréquence $nF_n$ et délivrant un deuxième signal d'horloge de fréquence $F_n$;
— un diviseur de fréquence par p, recevant le premier signal d'horloge et délivrant respectivement p signaux d'horloge $h_i$ (i variant de 0 à p−1) de fréquence $F_p$ et dont les p phases $\varphi_i$ sont telles que

$$\varphi_{i+1} - \varphi_i = \frac{2\pi}{p},$$

pour tout i;
— un multiplexeur ayant p entrées transmettant l'un des p signaux d'horloge $h_i$;
— des moyens pour commander le multiplexeur afin de sélectionner un signal d'horloge $h_i$ tel que:

$$i = j . N . (n-p) \text{ modulo } p,$$

à chaque instant $t_o + j . t_b$, où $t_o$ est un instant où le signal d'horloge $h_o$ est en phase avec le signal d'horloge de fréquence $F_n$, et où $t_b$ est la durée d'une suite de N données décomprimées;
— un circuit de commande commandant une écriture des données dans l'une des mémoires au rythme $F_p$ du signal d'horloge $h_i$ sélectionné, et une lecture des données dans l'autre mémoire au rythme $F_n$ du deuxième signal d'horloge, alternativement dans les deux mémoires.

La présente invention sera mieux comprise à l'aide de la description ci-après et des figures s'y rapportant sur lesquelles:
la figure 1 représente un mode de réalisation du dispositif de compression selon l'invention,
la figure 2 représente un mode de réalisation du dispositif de décompression selon l'invention,
la figure 3 représente un diagramme des signaux permettant d'expliquer le fonctionnement des dispositifs montrés sur les figures 1 et 2.

Les dispositifs de synchronisation précise relevant de la technologie courante, n'ont pas été représentés en vue de rendre les dessins plus clairs et de simplifier l'exposé.

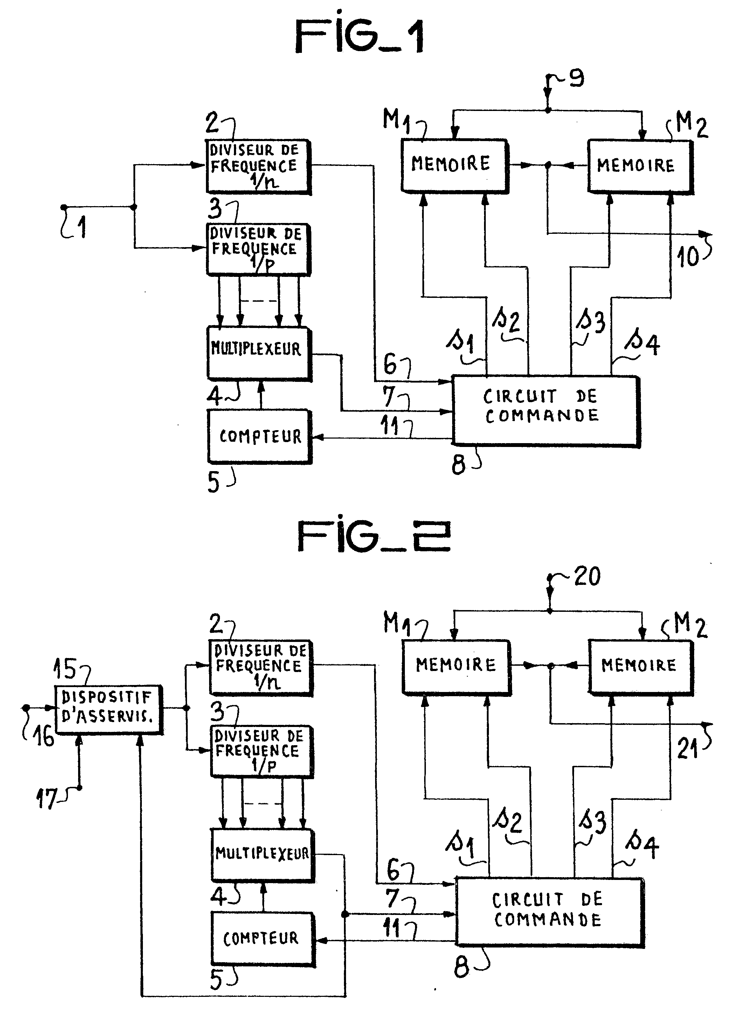

Sur la figure 1, le dispositif de compression représenté, se décompose principalement en deux parties:

La première partie est constituée de deux mémoires $M_1$ et $M_2$ et d'un circuit de commande 8.

Les deux mémoires $M_1$ et $M_2$ comportent une entrée commune, couplée à une borne d'entrée 9 destinée à recevoir un signal de données »à comprimer«, et une sortie commune, couplée à une borne de sortie 10 destinée à restituer un signal de données »comprimé«. Chacune de ces deux mémoires est constituée de N cases mémoire permettant la mémorisation de N bits.

Le circuit de commande 8, dont la fonction essentielle est de commander les rythmes d'écriture et de lecture des données dans les mémoires $M_1$ et $M_2$, comporte quatre sorties $s_1$, $s_2$, $s_3$ et $s_4$ respectivement reliées à une entrée d'écriture de la mémoire $M_1$, à une entrée de lecture de la mémoire $M_1$, à une enrée d'écriture de la mémoire $M_2$, et à une entrée de lecture de la mémoire $M_2$, deux entrées 6 et 7, et une sortie 11. Ce circuit 8 comporte en outre un commutateur manuel, non représenté, dont la position détermine la valeur du nombre N.

Lorsqu'un signal de données »à comprimer«, dont le rythme des données est $F_n$, est présent sur la borne d'entrée 9 à un instant initial $t_0$, le circuit de commande 8 délivre, sur sa sortie $s_1$, un signal $e_1$ de commande d'écriture dans la mémoire $M_1$ suivant la fréquence $F_n$.

La durée de ce signal de commande $e_1$ est $t_b$, ce qui correspond au temps nécessaire pour mémoriser un paquet de N données du signal d'entrée.

A l'instant $t_1 = t_0 + t_b$, le circuit de commande 8 délivre, sur sa sortie $s_3$, un signal $e_2$ de commande d'écriture dans la mémoire $M_2$ suivant la fréquence $F_n$, et sur sa sortie $s_2$, un signal $l_1$ de commande de lecture, suivant la fréquence $F_p$,

des données mémorisées dans la mémoire $M_1$. La durée du signal de commande d'écriture $e_2$ est $t_b$. La durée du signal de commande de lecture $l_1$ est $t_{bc}$.

A l'instant suivant $t_0 + 2t_b$, le circuit de commande 8 délivre, sur sa sortie $s_1$, un signal de commande $e_1$ d'écriture dans la mémoire $M_1$ et, sur sa sortie $s_4$, un signal de commande $l_2$ de lecture dans la mémoire $M_2$.

Il en découle que les sorties des mémoires $M_1$ et $M_2$ délivrent alternativement, aux instants $t_0 + jt_b$ (j variant de 0 à q, q entier positif), un paquet de N données dont le rythme est $F_p$. Le signal de données »comprimé«, fourni sur la borne 10, est donc constitué d'une suite de paquets de N bits, de durée $t_{bc}$, espacés d'une durée $\tau = t_b - t_{bc}$.

La deuxième partie du dispositif est constituée d'une borne d'entrée 1 destinée à recevoir un signal d'horloge $H_u$ à la fréquence $F_u = \dfrac{1}{u}$, d'un premier diviseur de fréquence 2, d'un deuxième diviseur de fréquence 3, d'un multiplexeur et d'un compteur 5. Le compteur 5 est un compteur cyclique de 1 à p. Les diviseurs 2 et 3 divisent respectivement par n et p la fréquence du signal présent sur leur entrée; les valeurs de n et de p sont en outre contenues en mémoire dans le circuit de commande 8.

Cette deuxième partie permet de fournir aux entrées 6 et 7 du circuit de commande 8 un signal d'horloge $H_n$ à la fréquence $F_n = \dfrac{F_u}{n}$, et un signal d'horloge $H_p$ à la fréquence $F_p = \dfrac{F_u}{p}$ qui est, à chaque instant $t_0 + jt_b$, en phase avec le signal d'horloge $H_n$. Le circuit de commande 8 utilise ces deux signaux d'horloge $H_n$ et $H_p$ pour constituer les signaux d'écriture et de lecture $e_1$, $e_2$, $l_1$ et $l_2$, en fonction du nombre N fixé par le commutateur.

Le signal d'horloge $H_n$ est fourni par le diviseur 2 dont l'entrée et la sortie sont respectivement connectées à la borne d'entrée 1 et à l'entrée 6 du circuit de commande 8.

Le signal d'horloge $H_p$ est fourni par le multiplexeur 4. Ce multiplexeur 4 comporte une sortie reliée à l'entrée 7 du circuit de commande 8, p entrées respectivement connectées à p sorties du diviseur 3, et une entrée de commande couplée à la sortie 11 du circuit de commande 8 à travers un compteur 5.

Pour mieux comprendre le fonctionnement de ces éléments, il faut faire la remarque suivante:

Si à un instant $t_0$, les signaux d'horloge $H_n$ et $H_p$ respectivement délivrés par le diviseur 2 et par le multiplexeur 4 sont mis en phase, en initialisant les diviseurs 2 et 3, la phase du signal $H_p$ présente, aux instant $t_0 + jt_b$, un écart de valeur

$$ jN\,(n-p)\frac{2\pi}{p}, $$

avec la phase qu'il devrait avoir pour être en phase avec le signal $H_n$.

Pour les remettre en phase, il suffit de modifier d'une valeur

$$ jN\,(n-p)\frac{2\pi}{p}, $$

soit la valeur du signal $H_p$, soit la phase du signal $H_n$. Comme le signal $H_n$ correspond au rythme du train de données »à comprimer«, il ne peut être transformé; la modification ne peut porter que sur $H_p$.

La deuxième partie de notre dispositif permet de commander cette mise en phase des signaux d'horloge en choisissant pour $H_p$ un signal pris parmi p signaux $h_i$ (i variant de 0 à p−1) de fréquence $F_p = \dfrac{F_u}{p}$, et dont les p phases $\varphi_i$ sont telles qu'à un instant quelconque,

$$ \varphi_{i+1} - \varphi_i = \frac{2\pi}{p}, $$

pour tout i. Les p signaux $h_i$ sont fournis par les p sorties du diviseur 3 dont l'entrée est reliée à la borne d'entrée 1.

A chaque instant $t_0 + jt_b$, le signal en phase avec le signal $H_n$ est le signal

$$ h_{jN(n-p)[p]}, jN(n-p)[p] $$

correspondant à la valeur $jN(n-p)$ modulo p comprise entre 0 et p−1, $jN(n-p)$ modulo p signifiant que

$$ jN(n-p) = k''p + jN(n-p) $$

quelle que soit la valeur entière de $k''$.

A chaque instant $t_0 + jt_b$, le choix du signal d'horloge en phase avec le signal $H_n$ est donc fonction du nombre $jN(n-p)[p]$:

Afin de pouvoir effectuer ce choix, le circuit de commande 8 comporte un générateur d'impulsions (non représenté) dont la sortie correspond à la sortie 11 du circuit 8. Ce générateur permet de fournir à l'entrée du compteur 5, entre les instants

$$ t_0 + jt_b + t_{bc} - tb \text{ et } t_0 + jt_b, $$

$N(n-p)$ impulsions de commande d'incrémentation. Il en découle qu'à chaque instant $t_0 + jt_b$, le compteur 5 fournit à l'entrée de commande du multiplexeur 4, nombre $jN(n-p)[p]$, ce qui entraîne que le signal délivré par la sortie du multiplexeur 4 est le signal $h_{jN(n-p)[P]}$.

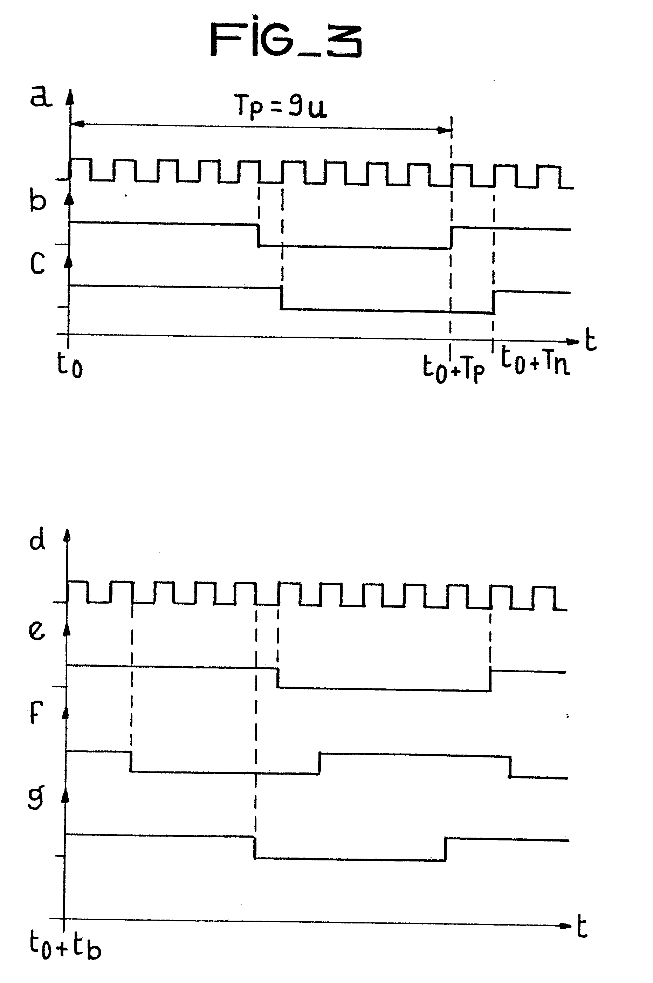

Il a été représenté sur la figure 3, un diagramme de signaux d'horloge correspondant à ceux d'un dispositif de compression selon l'invention fonctionnant pour les valeurs caractéristiques suivantes:

$F_n = 16$ kbits/s; $n = 10$;
$p = 9$; $F_p = 17{,}78$ kbits/s;
$F_u = 160$ kbits/s; $N = 12$;
d'où $t_b = 120$ u et $T_p = 9$ u.

Sur cette figure, les signaux a, b et c représentent respectivement, à partir de l'instant $t_o$, le signal d'horloge $H_u$, le signal d'horloge $h_o$, et le signal d'horloge $H_n$.

Quant aux signaux d, e, f et g, ils représentent respectivement, à partir de l'instant $t_o + t_b$, le signal d'horloge $H_u$, le signal d'horloge $H_n$, le signal d'horloge $h_o$, et le signal d'horloge $h_3$.

A l'instant $t_o$, les signaux d'horloge $h_o$ et $H_n$ sont en phase.

A l'instant $t_o + t_b$, c'est-à-dire $j = 1$, le signal d'horloge $h_o$ n'est plus en phase avec $H_n$, c'est le signal $h_3$ qui est en phase. Or à cet instant $t_o + t_b$, le compteur reçoit douze impulsions; sa sortie délivre donc la valeur 3, ce qui entraîne bien que le signal $h_3$ soit fourni par le multiplexeur 4.

Au moment où les données sont décomprimées pour reconstituer un flot continu de rythme $F_n$, la phase du signal d'horloge de fréquence $F_p$ subit des sauts de phase de valeur opposée à celle des sauts subis au moment de la compression. Ainsi les données comprimées sont traitées avec un signal d'horloge de fréquence $F_p$ convenablement synchronisé sur leur rythme, puis sont restituées au rythme $F_n$, dont le signal d'horloge est synchronisé sur le signal d'horloge de fréquence $F_p$ après la compensation des sauts de phase.

La structure du dispositif de décompression représenté sur la figure 2 est semblable à celle du dispositif de compression montré sur la figure 1.

Le circuit de commande 8 et les mémoires $M_1$ et $M_2$ correspondent aux éléments de la figure 1 ayant le même repère. Leur fonctionnement est identique à condition de considérer que les rythmes de remplissage et de vidage des mémoires sont intervertis, que l'entrée commune des mémoires est reliée à une borne d'entrée 20 destinée à recevoir un signal de données »comprimé«, et que la sortie commune des mémoires est reliée à une borne de sortie 21 destinée à restituer un signal de données »décomprimé«.

Quant aux éléments 2, 3, 4 et 5, ils sont en tous points semblables aux éléments repérés sur la figure 1 par le même repère.

Seul l'élément 15 a été rajouté par rapport au dispositif de compression de la figure 1.

Il s'agit d'un dispositif d'asservissement classique 15 dont la sortie fournit à l'entrée commune des diviseurs de fréquence 2 et 3 le signal d'horloge $H_u$. Ce dispositif d'asservissement 15 comporte une première entrée reliée à une borne 16 destinée à recevoir un signal d'horloge $H_t$ de fréquence t fois plus élevée que $F_u$, une deuxième entrée connectée à la borne 17 destinée à recevoir un signal définissant les transitions du signal de données »comprimé«, et une troisième entrée reliée à la sortie du multiplexeur 4. Son fonctionnement est classique; il consiste à diviser la fréquence du signal d'horloge $H_t$ à l'aide d'un diviseur à nombre variable. La valeur de ce nombre diviseur variable est commandée par un signal de commande, fourni par un détecteur de la position des transitions du signal de données par rapport au front montant du signal d'horloge $H_p$ obtenu à la sortie du multiplexeur 4, afin de faire varier la fréquence et par suite la phase de ce signal d'horloge $H_p$ et du signal $H_n$ présent à la sortie du diviseur 2.

Par ailleurs, les éléments 2, 3, 4 et 5 permettent de synchroniser $H_p$ et $H_n$ selon le procédé décrit précédemment pour le dispositif de compression.

L'invention n'est pas limitée aux modes de réalisation décrits et représentés.

En particulier, il est à la portée de l'homme de l'art de réaliser autrement un circuit pour commander le multiplexeur en fonction de $N(n-p)$ et du signal présent à la sortie du multiplexeur (c'est-à-dire en fonction de j).

**Revendications**

1. Dispositif de compression temporelle d'une suite continue de donnés, dans un rapport $k = \dfrac{p}{n}$ (p et n entiers positifs, premiers entre eux), effectuant une compression par paquets de N données, comportant: deux mémoires ($M_1$ et $M_2$) ayant une entrée commune recevant un signal de données »à comprimer« dont le rythme des données est $F_n$ et une sortie commune délivrant un signal de données »comprimé«; et des moyens de commande pour commander une écriture de données à un rythme $F_n$ et une lecture de ces données à un rythme $F_p = k \cdot F_n$, alternativement dans l'une des mémoires ($M_1$) et dans l'autre mémoire ($M_2$); caractérisé en ce que ces moyens de commande comportent:

— un diviseur de fréquence (2) par n, recevant un premier signal d'horloge de fréquence $nF_n$, et délivrant un deuxième signal d'horloge de fréquence $F_n$;

— un diviseur de fréquence (3) par p recevant le premier signal d'horloge et délivrant respectivement p signaux d'horloge $h_i$ (i variant de 0 à $p-1$) de fréquence $F_p$ et dont les p phases $\varphi_i$ sont telles que

$$\varphi_{i+1} - \varphi_i = \frac{2\pi}{p},$$

pour tout i;

— un multiplexeur (4) transmettant l'un des p signaux d'horloge $h_i$;

— des moyens (5) pour commander le multiplexeur (4) pour sélectionner un signal d'horloge $h_i$ tel que:

$$i = j \cdot N \cdot (n-p) \text{ modulo } p$$

à chaque instant $t_o + j \cdot t_b$, où j est un nombre entier positif, où $t_o$ est un instant où le signal d'horloge $h_o$ est en phase avec le signal d'horloge de fréquence $F_n$, et où $t_b$ est la durée d'une suite de N données à comprimer;

— un circuit de commande (8) commandant l'écriture de données dans l'une des mémoires (M₁) au rythme $F_n$ du deuxième signal d'horloge et la lecture de données dans l'autre mémoire (M₂) au rythme $F_p$ du signal d'horloge $h_i$ sélectionné, alternativement dans les deux mémoires (M₁ et M₂).

2. Dispositif de décompression temporelle de données fournissant une suite continue de données à partir d'un signal »comprimé« fourni par un dispositif de compression par paquets de N données, et dont le rapport de compression est $k = \dfrac{p}{n}$ (p et n entiers positifs, premiers entre eux), comportant: deux mémoires (M₁ et M₂) ayant une entrée commune recevant le signal »comprimé« dont le rythme des données est $F_p$, une sortie commune délivrant un signal »décomprime« dont le rythme des données est $F_n$; et des moyens de commande pour commander une écriture de données à un rythme $F_p$ puis une lecture de ces données à un rythme $F_n = \dfrac{F_p}{k}$, alternativement dans l'une des mémoires (M₁) et dans l'autre mémoire (M₂); caractérisé en ce que ces moyens de commande comportant:

— un diviseur de fréquences (2) par n ayant une entrée recevant un premier signal d'horloge de fréquence $nF_n$ et délivrant un deuxième signal d'horloge de fréquence $F_n$;
— un diviseur de fréquence (3) par p, recevant le premier signal d'horloge et délivrant respectivement p signaux d'horloge $h_i$ (i variant de 0 à p−1) de fréquence $F_p$ et dont les p phases $\varphi_i$ sont telles que

$$\varphi_{i+1} - \varphi_i = \frac{2\pi}{p},$$

pour tout i;
— un multiplexeur (4) ayant p entrées transmettant l'un des p signaux d'horloge $h_i$;
— des moyens (5) pour commander le multiplexeur (4) afin de sélectionner un signal d'horloge $h_i$ tel que:

$$i = j \cdot N \cdot (n-p) \text{ modulo } p,$$

à chaque instant $t_o + j \cdot t_b$, où j est un nombre entier positif, où $t_o$ est un instant où le signal d'horloge $h_o$ est en phase avec le signal d'horloge de fréquence $F_n$, et où $t_b$ est la durée d'une suite de N données décomprimées;
— un circuit de commande (8) commandant une écriture des données dans l'une des mémoires (M₁) au rythme $F_p$ du signal d'horloge $h_i$ sélectionné, et une lecture des données dans l'autre mémoire (M₂) au rythme $F_n$ du deuxième signal d'horloge, alternativement dans les deux mémoires (M₁ et M₂).

3. Dispositif de compression selon la revendication 1, caractérisé en ce que les moyens (5) pour commander le multiplexeur (4) sont constitués d'un compteur cyclique de 1 à p ayant une entrée destinée à recevoir $N(n-p)$ impulsions d'incrémentation avant chaque période de compression d'un paquet de N données, et une sortie couplée à une entrée de commande du multiplexeur (4).

4. Dispositif de décompression selon la revendication 2, caractérisé en ce que les moyens (5) pour commander le multiplexeur (4) sont constitués d'un compteur cyclique de I à p ayant une entrée destinée à recevoir $N(n-p)$ impulsions d'incrémentation avant chaque période de décompression d'un paquet de N données, et une sortie couplée à une entrée de commande du multiplexeur (4).

**Patentansprüche**

1. Vorrichtung zur zeitlichen Kompression einer kontinuierlichen Folge von Daten in einem Verhältnis k = p/n (worin p und n positive ganze Zahlen ohne gemeinsamen Teiler sind), welche eine Kompression in Paketen zu N Daten durchführt, enthaltend: Zwei Speicher (M₁ und M₂) mit einem gemeinsamen Eingang, die ein »zu komprimierendes« Datensignal empfangen, dessen Datenrhythmus $F_n$ beträgt, und einen gemeinsamen Ausgang besitzen, der ein »komprimiertes« Datensignal ausgibt; und Steuermittel zur Steuerung des Einschreibens von Daten mit einem Rhythmus $F_n$ und zum Auslesen dieser Daten mit einem Rhythmus $F_p = k \cdot F_n$, und zwar abwechselnd in dem einen Speicher (M₁) und in dem anderen Speicher (M₂); dadurch gekennzeichnet, daß diese Steuermittel enthalten:

— einen durch n teilenden Frequenzteiler (2), der ein erstes Taktsignal der Frequenz $nF_n$ empfängt und ein zweites Taktsignal der Frequenz $F_n$ abgibt;
— einen durch p teilenden Frequenzteiler (3), der das erste Taktsignal empfängt und jeweils p Taktsignale $h_i$ abgibt (worin i zwischen 0 und p−1 variiert), dessen Frequenz $F_p$ ist und dessen p Phasen $\Phi_i$ derart sind, daß

$$\Phi_{i+1} - \Phi_i = 2\pi/p,$$

was für jedes i gilt;
— einen Multiplexer (4), der eines der p Taktsignale $h_i$ durchschaltet;
— Mittel (5) zur Steuerung des Multiplexers (4) für die Selektion eines Taktsignals $h_i$ in solcher Weise, daß:

$$i = j \cdot N \cdot (n-p) \text{ modulo } p,$$

und zwar zu jedem Zeitpunkt $t_o + j \cdot t_b$, worin j eine ganze positive Zahl ist, $t_o$ ein Zeitpunkt ist, zu welchem das Taktsignal $H_o$ in

Phase mit dem Taktsignal der Frequenz $F_n$ ist, und worin $t_b$ die Dauer einer Folge von N zu komprimierenden Daten ist;

— eine Steuerschaltung (8), welche das Einschreiben von Daten in den einen Speicher ($M_1$) im Rhythmus $F_n$ des zweiten Taktsignals und das Auslesen von Daten aus dem anderen Speicher ($M_2$) im Rhyrhmus $F_p$ des selektierten Taktsignals $h_i$ steuert, und zwar abwechselnd in den beiden Speichern ($M_1$ und $M_2$).

2. Vorrichtung zur zeitlichen Dekompression von Daten, welche eine kontinuierliche Folge von Daten aus einem »komprimierten« Signal erzeugt, das von einer Kompressionsvorrichtung in Paketen zu N Daten geliefert wird, deren Kompressionsverhältnis gleich $k = p/n$ ist (worin p und n ganze positive Zahlen ohne gemeinsamen Teiler sind), enthaltend: Zwei Speicher ($M_1$ und $M_2$), die einen gemeinsamen Eingang aufweisen, welcher das »komprimierte« Signal empfängt, dessen Datenrhythmus $F_p$ beträgt, und einen gemeinsamen Ausgang aufweisen, der das »dekomprimierte« Signal abgibt, bei dem der Datenrhythmus $F_n$ beträgt; und Steuermittel zum Steuern des Einschreibens von Daten in einem Rhythmus $F_p$ und anschließenden Auslesen dieser Daten in einem Rhythmus $F_n = \dfrac{F_p}{k}$ , und zwar abwechselnd in dem einen Speicher ($M_1$) und in dem anderen Speicher ($M_2$); dadurch gekennzeichnet, daß diese Steuermittel enthalten:

— einen durch n dividierenden Frequenzteiler (2), dessen Eingang ein erstes Taktsignal der Frequenz $nF_n$ empfängt und der ein zweites Taktsignal der Frequenz $F_n$ abgibt;
— einen durch p dividierenden Frequenzteiler (3), der das erste Taktsignal empfängt und jeweils p Taktsignale $h_i$ (worin i zwischen 0 und $p-1$ variiert) der Frequenz $F_p$ abgibt, dessen p Phasen $\Phi_i$ derart sind, daß für jedes i die Beziehung

$$\Phi_{i+1} - \Phi_i = 2\,\pi/p$$

gilt;
— einen Multiplexer (4) mit p Eingängen, der eines der p Taktsignale $h_i$ durchschaltet;
— Mittel (5) zum Steuern des Multiplexers (4), damit dieser ein solches Taktssignal $h_i$ auswählt, daß:

$$i = j \cdot N \cdot (n-p) \text{ modulo } p,$$

und zwar zu jedem Zeitpunkt $t_0 + j \cdot t_b$, worin j eine ganze positive Zahl, $t_0$ ein Zeitpunkt, wo das Taktsignal $h_0$ in Phase mit dem Taktsignal mit der Frequenz $F_n$ ist, und worin $t_b$ die Dauer einer Folge von N dekomprimierten Daten ist;
— eine Steuerschaltung (8), welche eine Einschreiben der Daten in einen der Speicher ($M_1$) im Rhythmus $F_p$ des selektierten Taktsignals $h_i$ und ein Auslesen der Daten aus einem anderen Speicher ($M_2$) im Rhythmus $F_p$ des zweiten Taktspeichers steuert, und zwar abwechselnd in den beiden Speichern ($M_1$ und $M_2$).

3. Kompressionsvorrichtung nach Anspruch 1, dadurch gekennzeichnet, daß die Mittel (5) zum Steuern des Multiplexers (4) durch einen zyklischen Zähler gebildet sind, der von 1 bis p zählt und einen Eingang aufweist, der zum Empfang von N ($n-p$) Inkrementierimpulsen vor jeder Periode der Kompression eines Paketes zu N Daten bestimmt ist, und einen Ausgang aufweist, der an einen Steuereingang des Multiplexers (4) angekoppelt ist.

4. Dekompressionsvorrichtung nach Anspruch 2, dadurch gekennzeichnet, daß die Mittel (5) zum Steuern des Multiplexers (4) aus einem zyklischen Zähler gebildet sind, der von 1 bis p zählt und einen Eingang aufweist, der zum Empfangen von N ($n-p$) Inkrementierimpulsen vor jeder Periode der Dekompression eines Paketes zu N Daten bestimmt ist, und einen Ausgang aufweist, der an einen Steuereingang des Multiplexers (4) angekoppelt ist.

## Claims

1. Device for time compression of a continuous data sequence at a ratio $k = p/n$ (p and n being positive integers without a common divisor) performing a compression by packets of N data, comprising: two memories ($M_1$ and $M_2$) having a common input receiving a data signal »to be compressed« having a data rhythm of $F_n$ and a common output supplying a »compressed« data signal; and control means for controlling the writing of data at a rhythm $F_n$ and the reading of these data at a rhythm $F_p = k \cdot F_n$, alternately in one of the memories ($M_1$) and the other memory ($M_2$); characterized in that these control means comprise:

— a frequency divider (2) by n receiving a first clock signal of the frequency $nF_n$ and supplying a second clock signal of the frequency $F_n$;
— a frequency divider (3) by p receiving the first clock signal and supplying respectively p clock signals $h_i$ (i varying from 0 to $p-1$) of the frequency $F_p$ and the p phases $\Phi_i$ are such that

$$\Phi_{i+1} - \Phi_i = \frac{2\pi}{p},$$

for each i;

— a multiplexer (4) transmitting one of the p clock signals $h_i$;
— means (5) for controlling the multiplexer (4) to select a clock signal $h_i$ such that:

$i = j \cdot N \cdot (n-p)$ modulo p

at each moment $t_o + jt_b$, wherein j is a positive integer, wherein $t_o$ is a moment where the clock signal $h_o$ is in phase with the clock signal of the frequency $F_n$, and wherein $t_b$ is the duration of a sequence of N data to be compressed;

— a control circuit (8) controlling the writing of data into one of the memories ($M_1$) at the rhythm $F_n$ of the second clock signal and the reading of data from the other memory ($M_2$) at the rhythm $F_p$ of the selected clock signal $h_i$, alternately in the two memories ($M_1$ and $M_2$).

2. Device for the time decompression of data, supplying a continuous sequence of data from a »compressed« signal supplied by a devide for the compression of data by N packets, and the compression ratio of which is k = p/n (wherein p and n are positive integers without a common divisor), comprising: two memories ($M_1$ and $M_2$) having a common input receiving the »compressed« signal the data rhythm of which is $F_p$ and a common output supplying a »decompressed« signal having the data rhythm $F_p$; and control means for controlling the writing of data at a rhythm $F_p$ and then reading of these data at a rhythm $F_p = \dfrac{F_p}{k}$, alternately in one of the memories ($M_1$) and in the other memory ($M_2$); characterized in that the control means comprise:

— a frequency divider (2) by n having an input receiving a first clock signal of the frequency $nF_n$ and supplying a second clock signal of the frequency $F_n$;

— a frequency divider (3) by p receiving the first clock signal and supplying respectively p clock signals $h_i$ (i varying from 0 to p−1) of the frequency $F_p$ and the p phases $\Phi_i$ of which are such that

$\Phi_{i+1} - \Phi_i = 2\,\pi/p$ for each i;

— a multiplexer (4) having p inputs transmitting one of the p clock signals $h_i$;

— means (5) for controlling the multiplexer (4) to select a clock signal $h_i$ such that

$i = j \cdot N \cdot (n-p)$

modulo p at each moment $t_o + j \cdot t_b$, wherein j is a positive integer, wherein $t_o$ is a moment where the clock signal $h_o$ is in phase with the clock signal of the frequency $F_n$, and wherein $t_b$ is the duration of a sequence of N decompressed data;

— a control circuit (8) controlling a writing of data into one of the memories ($M_1$) at the rhythm $F_p$ of the selected clock signal $h_i$ and a reading of data from the other memory ($M_2$) at the rhythm $F_n$ of the second clock signal, alternately in the two memories ($M_1$ and $M_2$).

3. Compression device according to claim 1, characterized in that the means (5) for controlling the multiplexer (4) are formed of a cyclic counter from 1 to p having an input for receiving N (n−p) incrementation pulses prior to each compression period of a packet of N data and an output coupled to the control input of the multiplexer (4).

4. Decompression device according to claim 2, characterized in that the means (5) for controlling the multiplexer (4) are formed of a cyclic counter from 1 to p having an input for receiving N (n−p) incrementation pulses prior to each decompression period of a packet of N data and an output coupled to a control input of the multiplexer (4).

0 049 652

# FIG_1

# FIG_2

# FİG_3